# EUROPEAN PATENT SPECIFICATION

(11) **EP 1 134 198 B1**
(45) Date of publication and mention of the grant of the patent: **14.07.2004**
(21) Application number: 00830193.9
(22) Date of filing: 14.03.2000
(51) Int. Cl.: C03B 35/10, B65G 47/82

(54) **Device for transferring glass objects**
Eintragemaschine für Glasgegenstände
Poussoir de mise à l'arche

(43) Date of publication of application: 19.09.2001
(73) Proprietor: Revimac S.r.l., 12100 Cuneo (CN) (IT)
(72) Inventor: Bajo, Rolando, 36100 Vicenza (VI) (IT); Zini, Franco, 36071 Arzignano (VI) (IT)
(74) Representative: Eterno, Vincenzo

(56) References cited:
- EP-A- 0 499 733
- US-A- 4 039 073

## Description

The present invention relates to a device for transferring glass objects, particularly but not exclusively useful in the glass container industry for handling glass containers such as bottles, flasks, demijohns and glassware in general.

It is known that in this field glass objects are currently fed to the oven, or lehr, by automatic equipment provided for this purpose, which moves the objects in groups from a conveyor belt to the inlet of the lehr. More specifically, the lehr is usually of the type with continuous front loading, since it is equipped with an internal second conveyor which moves, at an adequate rate, the loaded containers from the inlet to the outlet. In turn, the lehr is controlled by a conveyor belt which runs laterally to the inlet of the lehr, so that the belt and the second conveyor lie at the same level and are mutually substantially perpendicular. On the other side of the inlet of the lehr with respect to the conveyor belt there is the transfer device, which continuously moves groups of objects from the belt to the bed of the lehr. The first proposed devices generally comprised a structure which had a linear motion. In greater detail, the structure was provided with a loading arm which was actuated respectively by a pneumatic-mechanical pusher and by a pneumatic-mechanical lifter, which were in turn actuated by means of the forming machine. Alternatively, an entirely mechanical structure has been proposed which is provided with two cams which guide the loading arm for pushing and lifting. A structure with mixed operation has also been proposed with a rod-and-crank system for the forward and backward movement of the loading arm and a pneumatic system for lifting and lowering the arm. A structure of the type with superimposed carriages is currently widely used which allows several loading curves with respect to the described devices. A structure of this type is known, for example, from US-A-5,472,077 which discloses a lehr loading device which substantially consists, on a support, of a first carriage, which moves on the support in a direction which is parallel to the direction of the second conveyor, of a second carriage on the first carriage, which moves in the direction of the belt, and of a third carriage, which is provided with a pusher bar and moves vertically. The carriages are actuated by electric actuators which are connected to a unit for programming and managing the movements and for controlling the operating parameters. Essentially, the operation of the above device can be divided into the steps of vertical positioning, chasing the batch of items to be transferred, transferring the objects from the belt to the second conveyor of the lehr, and returning to the initial position. The first step comprises moving the third carriage vertically downward in order to arrange the bar at the level of the body of the containers to be transferred. The second step comprises moving the first carriage toward the belt and moving the second carriage in the advancement direction of the belt. The third step comprises the contact between the bar and the objects and pushing the items from the belt to the second conveyor of the lehr. The fourth or final step comprises lifting the third carriage in order to separate the bar from the objects and returning the first and second carriages to the initial positions in order to start a new loading cycle. These movements partially overlap in order to generate the so-called loading curve, whose path, seen from above in the direction in which the belt advances, is approximately S-shaped.

A first drawback that can be observed in the above-described devices is the large area occupied in front of the lehr, because, as known, these mechanical bar movement systems occupy a significant amount of space both longitudinally and transversely.

A second drawback is the fact that in devices which provide for a chasing step, the conversion of their structure in order to take into account respectively right-side delivery or left-side delivery of the objects to be transferred is rather complicated and entails replacing a large number of mechanical parts.

Another drawback found in the above devices is that they are scarcely flexible, since their adaptation to the different widths of the inlets of commercially available lehrs is extremely complicated and expensive.

Another drawback is the fact that maintenance of these devices is dangerous, because the assigned personnel, for example during the replacement of the pusher bar, is directly exposed to the heat from the inlet of the lehr. Additionally, again from this point of view, the presence of the pusher bar in the initial position does not facilitate maintenance on the belt and on the second conveyor.

The aim of the present invention is to overcome the above-cited drawbacks of conventional lehr loaders in the hollow glass mass manufacturing industry. A further aim of the invention is to provide a device for transferring glass objects which is compact, can be adapted with a small number of simple operations to both right-side delivery and left-side delivery of the objects by the conveyor belt and can be easily modified in order to adapt its dimensions to those of the inlet of the lehr.

An object of the invention is to provide a transfer device which provides simplified and almost self-evident use, so that the assigned operator is capable of fully exploiting its features and particularities in a short time and without requiring expensive and long training periods.

Another object of the invention is to provide a device which has very high safety levels during operation and during maintenance operations to be performed on the device, on the belt and on the lehr.

Another object of the invention is to provide a device which is constructively simple, so as to reduce as much as possible the corresponding production costs, so that the sale price is lower than that of conventional and commercially available devices.

This aim, these objects and others which will become apparent hereinafter are achieved by a device for transferring glass objects from a conveyor to a treatment apparatus which is arranged to the side of the conveyor in a substantially perpendicular direction, characterized in that it comprises a supporting structure which is laterally adjacent to the conveyor and lies opposite the apparatus with respect to the conveyor, a member which is rotatably supported by the structure and rotates on command about an axis which is parallel to the feed direction of the belt, a plurality of loading arms which are articulated, can move on command and are hinged along the member in order to guide a pusher bar which is adapted to move groups of the objects from the conveyor to the apparatus.

Further characteristics and advantages of the invention will become apparent from the description of a preferred but not exclusive embodiment thereof, illustrated only by way of non-limitative example in the accompanying drawings, wherein:

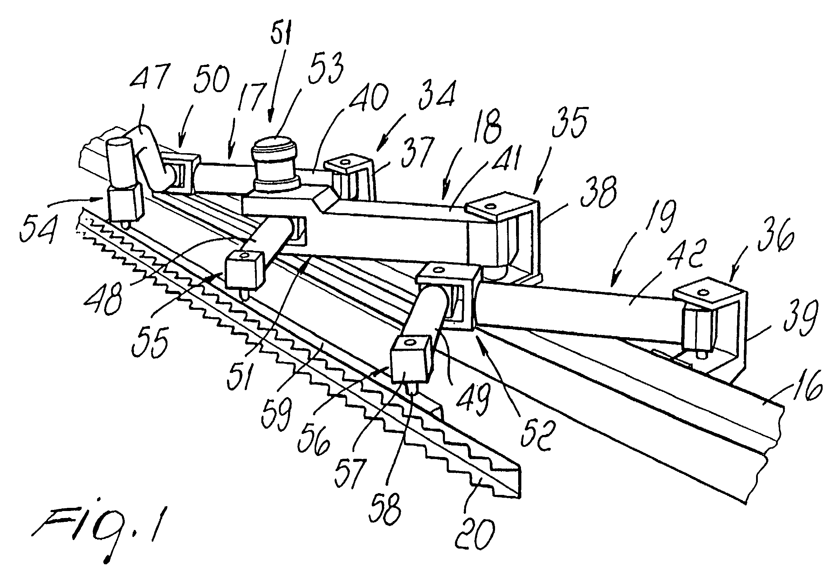

Figure 1 is a detailed perspective view of the device for transferring glass objects according to the invention;
Figure 2 is a partially sectional rear view of the device according to the invention;
Figure 3 is a top view of the conveyor belt, of the front portion of the treatment apparatus and of the device according to the invention during the chasing of the objects to be loaded;
Figure 4 is a top view, similar to Figure 3, of the device according to the invention during contact with the objects to be loaded;
Figure 5 is a top view, similar to Figure 4, of the device according to the invention, in the intermediate loading step;
Figure 6 is a top view, similar to Figure 5, of the device according to the invention during the loading completion step;
Figure 7 is a sectional side view of the conveyor belt, of the front portion of the lehr and of the device according to the invention, taken along a transverse plane which lies approximately between the central loading arm and the end loading arm in the conveyor belt advancement direction, with the device respectively in the step for chasing the objects to be loaded and in the loading completion step;
Figure 8 is a view, similar to Figure 7, of the device in the step for return to the initial position;
Figure 9 is a detailed front view of the device according to the invention at the pusher bar;
Figure 10 is a detailed sectional view of the device according to the invention, taken along the plane X-X of Figure 9.

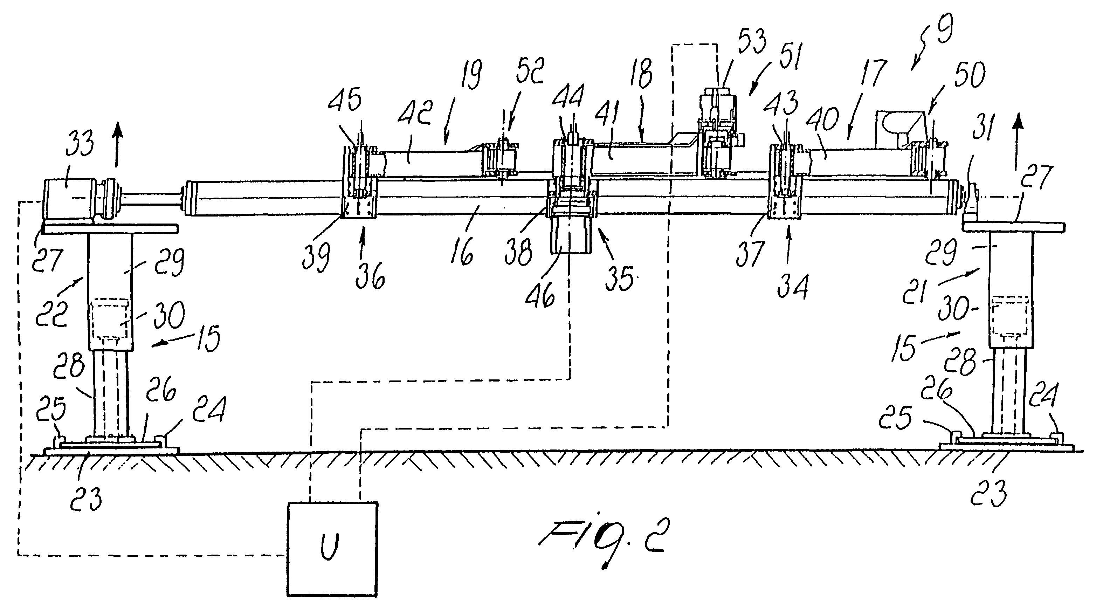

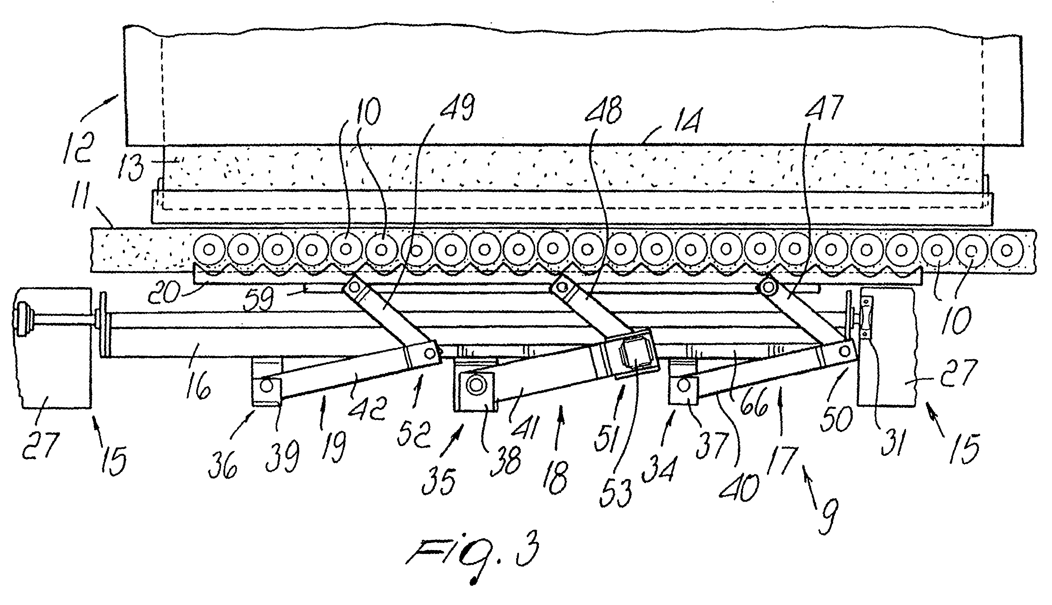

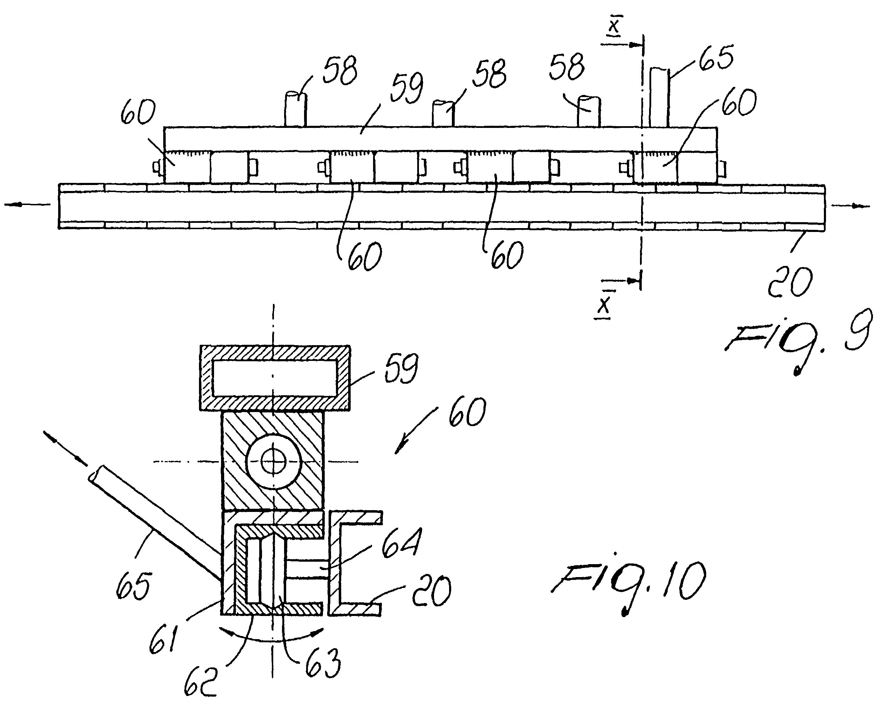

With reference to the accompanying figures, the transfer device, generally designated by the reference numeral 9, is used to transfer objects made of hollow glass, such as bottles 10, from a conveyor, in the specific case a conveyor belt, generally designated by the reference numeral 11, into a treatment apparatus, in the specific case a lehr, generally designated by the reference numeral 12. Generally, the lehr is of the front-loading type provided with a movable mesh 13 which conveys the bottles 10 from a loading inlet 14 to an outlet (which is not shown). The belt 11 and the movable mesh 13 are arranged at the same height and are adjacent and substantially perpendicular to each other, as shown in Figures 3 to 8. In these figures, for the purposes of the present embodiment, the belt 11 makes the bottle 10 advance from right to left, performing what is commonly known in the hollow-glass sector as "left-side delivery". The bottles 10 can of course advance from left to right in the direction of so-called "right-side delivery" without thereby abandoning the scope of the invention. The transfer device 9 is arranged so as to face the loading inlet 14 of the lehr 12 on the other side of the belt 11 in a per se known position. The device 9 is substantially composed of a supporting structure, generally designated by the reference numeral 15, for supporting a member 16 which is rotatably supported by the structure 15 and rotates on command about an axis which is parallel to the direction of advancement of the belt 11, and three loading arms, generally designated by the reference numerals 17, 18 and 19 from right to left, which are articulated and can move on command and are hinged along the member 16 so as to guide a pusher bar 20 which is suitable to move groups of bottles 10 from the conveyor 11 to the lehr 12. The structure 15 can move horizontally, substantially at right angles to the direction of advancement of the belt 11, toward or away from it, and in a vertical direction, respectively in order to adjust the working position and elevation of the device 9. In greater detail, the structure 15 is composed of two laterally arranged lifting means which are designated by the reference numerals 21 and 22; each lifting means is composed of a plate 23 which is fixed to the floor and supports two L-shaped members 24 and 25 which are arranged in a parallel configuration so as to form two guides which allow to move an additional plate 26 at right angles to the advancement direction of the belt 11; the plate 26 in turn rigidly supports two posts, on the upper ends of which there is a plate 27 which is suitable to support the member 16. Each one of the posts is formed by two tubular members which can slide with respect to each other and are inserted in each other so as to allow the vertical adjustment of the device 9. More specifically, each post is composed of a first tubular member 28, which is rigidly coupled to the plate 26 and whose upper end portion is inserted in a second tubular member 29, which supports the plate 27 at its upper end. The vertical movement of the second member 29 with respect to the first tubular member 28 is provided by means of a manual lifting unit 30 of the screw type, which is arranged between two adjacent posts and interacts with the second member 29 and the plate 26. Of course, in order to move the right and left posts simultaneously, the respective manual screw lifters are connected by a rigid means, such as a rod (not shown). The member 16 is formed by a strong box-like beam which is longitudinally elongated, has a cross-section which is for example rectangular, and lies parallel to the advancement direction of the conveyor belt 11. The end portions of the member 16 are joined by bolts to two end pivots: one of the pivots engages in a rolling bearing which is recessed in a suitable omega-shaped support 31 which is bolted to the upper face of one of the plates 27, and the other pivot is kinematically connected to a first electric actuator 33 which is arranged on the other plate 27. The example of Figure 2 of course relates to a left-side delivery. The illustrated arrangement is easily modified with right-side delivery by transferring the actuator onto the plate provided with the support and by transferring the support onto the plate provided with the actuator. This first actuator 33 turns on command the member 16 about the main axis thereof, which coincides with the longitudinal axis, at the most through a half circle. The first hinges of the arms 17, 18 and 19, generally designated by the reference numeral 34, 35 and 36, are arranged so as to be uniformly spaced along the extension of the member 16. The hinges are formed by three hinge members 37, 38 and 39 which are bolted along the rear wall of the member 16 and cooperate with the end portions of the arms 17, 18 and 19. More specifically, the members 37, 38 and 39 have protrusions which protrude upward from the member 16, are approximately C-shaped with a forward-facing opening and accommodate the end portions of the first tubular bodies 40, 41 and 42 of the arms 17, 18 and 19. Pairs of vertically axially aligned holes are formed on the parallel wings of the C-shaped protrusions and accommodate corresponding hinge pins, designated by the reference numerals 43, 44 and 45 respectively, which are in turn rigidly accommodated in seats formed in the end portions of the first tubular bodies 40, 41 and 42. A second electric actuator 46 is directly connected to the pin 44 in a suspended position and is suitable to turn the tubular body 41 on a horizontal plane. The arms 17, 18 and 19 are constituted by the already-mentioned first tubular members 40, 41 and 42 and by second tubular members 47, 48 and 49 which are mutually articulated by second central hinges which are generally designated by the reference numerals 50, 51 and 52. These hinges are formed by the end portions of the first tubular members 40, 41 and 42, which are C-shaped and accommodate the end portions of the second tubular members 47, 48 and 49, and by connecting pins (not shown), which are inserted in holes formed in a vertically axially aligned arrangement on the parallel wings of the C-shaped portions and are accommodated in seats formed in the end portions of the second tubular members 47, 48 and 49. A third electric actuator 53 is arranged on the hinge 51 provided on the central arm 18, above the corresponding C-shaped member, and turns on a horizontal plane the second tubular member 48 with respect to the first tubular member 41, which is in turn actuated by the electric actuator 46. The first electric actuator 33, the second electric actuator 46 and the third electric actuator 53 are of course controlled by a programming and control unit (U), shown schematically in Figure 2, which is provided with suitable software and which drives the device 9 in the various steps of operation according to the settings entered by the operator. The second tubular member 47 of the end arm 17 is furthermore curved so as to avoid interfering with the transit of the bottles 10 that advance along the conveyor belt 11 during the operation of the device 9. Clearly, if the direction of advancement of the bottles is from left to right (right-side delivery), the member 47 replaces, with a small number of simple actions, for the same purpose, the member 49 of the end arm 19. The other ends of the second tubular members 47, 48 and 49 guide the pusher bar 20 by virtue of third hinges, generally designated by the reference numerals 54, 55 and 56. The hinges 54, 55 and 56 are provided substantially in the same manner. For example, the hinge 56 is formed by a prism-shaped body 57 which is associated with the end of the second tubular member 49 on which there is a vertical through hole which rotatably accommodates a pin 58 which is rigidly associated with the bar holder section 59. The bar 20 is hinged to the section 59, is of a known type and is constituted by a section which has a U-shaped cross-section and is provided with a plurality of V-shaped recesses along the edges that are meant to make contact with the bodies of the bottles 10. As shown in Figures 9 and 10, the bar holder 59 supports four hinges 60 which are evenly spaced and rigidly support a longitudinal member 61 which has an L-shaped cross-section, is approximately as long as the pusher bar 20 and is arranged so as to be rotated through a quarter of a circle; in turn, the longitudinal member 61 rigidly accommodates, in its right end portion, a longitudinal member 62 which has a C-shaped cross-section with the opening directed toward the rear of the bar 20 and is significantly shorter than the member 61. Two opposite V-shaped guides are formed along the internal surfaces of the lateral wings of the C-shaped member 62 for the sliding of two complementarily shaped rollers 63 which support the bar 20 by virtue of pivots 64. At the left end of the section 61 there is a bar retainer of a known type which is not shown. In the case of right-side delivery, the C-shaped member and the retainer of course swap places. This construction allows the bar 20 to oscillate with respect to the bar holder 59 in order to adapt the contact of the V-shaped recesses to the shape of the bodies of the bottles 10. The oscillation of the bar 20 is actuated by a linear actuator (not shown) of the per se known type which is arranged approximately on the first tubular member 42 by means of a rod 65 which is rigidly connected to the rear wing of the L-shaped longitudinal member 61. This construction furthermore allows to rapidly and easily replace the pusher bar 20, for example during a change in production, and to compensate for any thermal expansions of the bar. When the device 9 is in the inactive position, it is in fact sufficient to release the retainer and extract the bar 20 by pulling from the opposite end with respect to the retainer and then position a new bar 20, making the rollers of the bar slide in the V-shaped guides. It is noted that the end arms 17 and 19 do not have their own motor drive, since the actuators 46 and 53 arranged on the central arm 18 are sufficient for the purpose. Furthermore there is a bar 66 provided purely for stiffening which is arranged at the second hinges 50, 51 and 52.

The operation of the device is described hereinafter with particular reference to Figures 3 to 6.

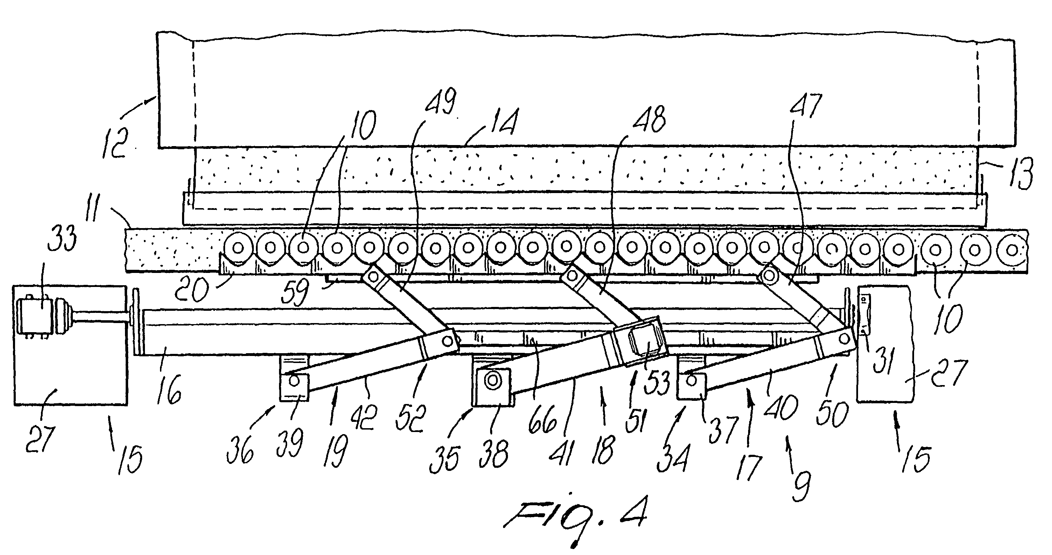

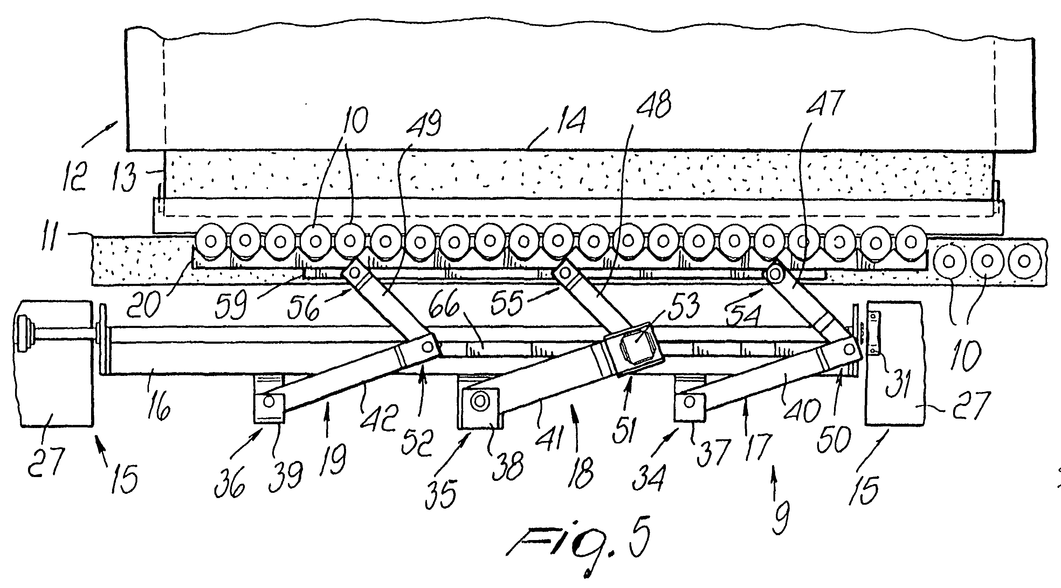

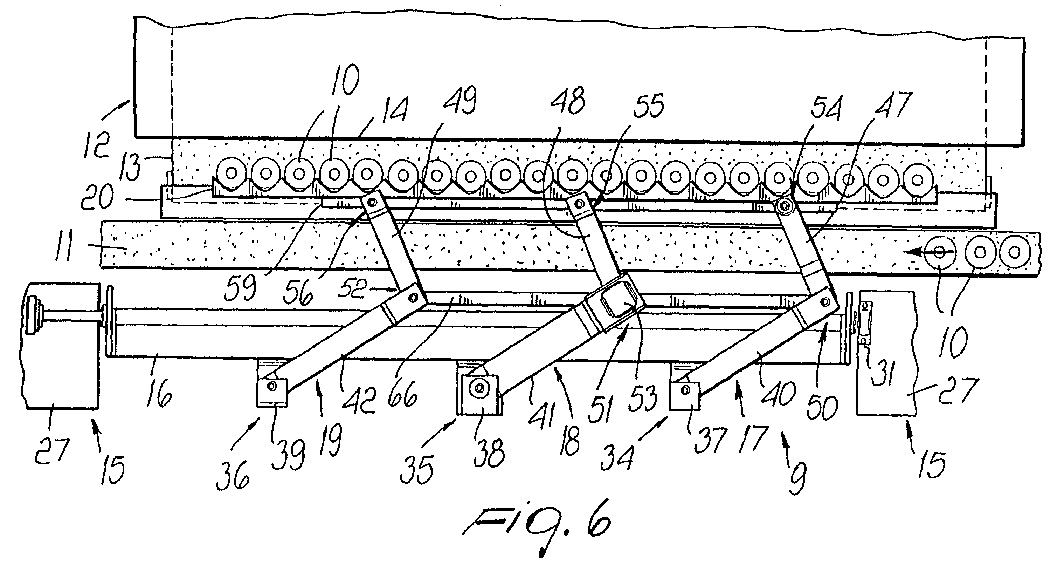

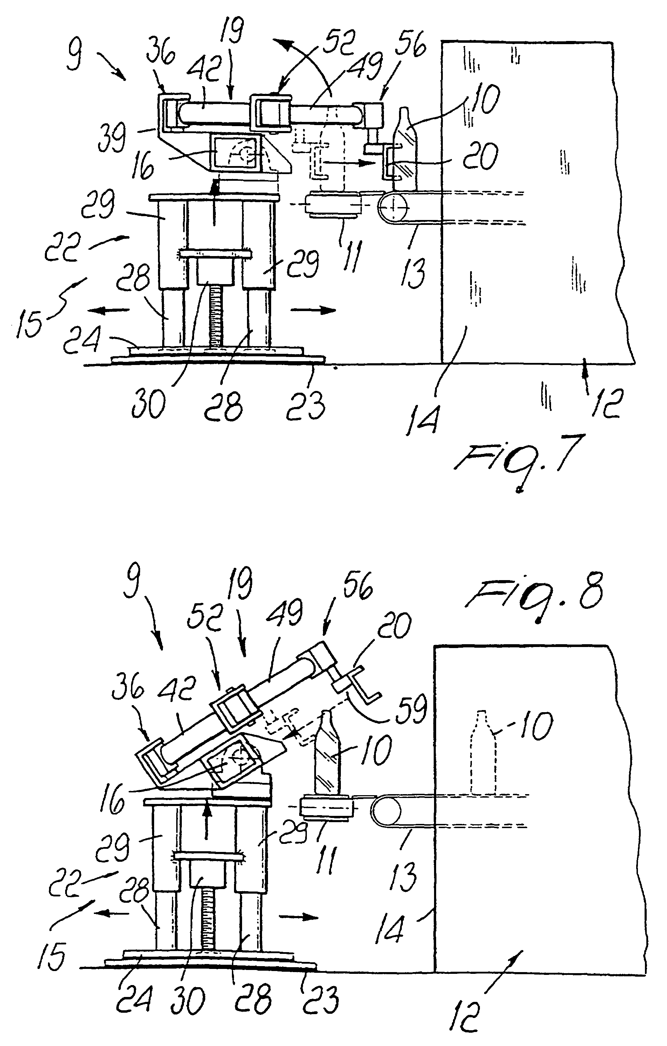

Suppose the device 9 has been installed in the factory in the configuration described approximately above and shown in the above cited figures. Suppose, furthermore, that the distance and height of the device 9 from the conveyor belt 11 have already been adjusted. The operating steps are set in succession by means of the unit (U), entering the parameters that define the intended loading curve, and then the bar 20 is rotated with respect to the bar holder 59 until the inclination that is suitable for the shape of the containers 10 is reached. The initial operating condition is shown in Figure 3, which shows the device 9 with the pusher bar 20 in the fully retracted position. The electric actuators 46 and 53 begin to move the central arm 18, which in turn also moves the end arms 17 and 19, accordingly forcing the bar 20 to move toward the bottles 10 until the bodies of a group of the bottles are gently accommodated in the V-shaped recesses, as shown in Figure 4. Then the loading arms 17, 18 and 19 guide the bar 20 forward in order to begin the translatory motion of the group of bottles 10 from the belt 11 to the conveyor 13 of the lehr 12, as shown in Figures 5 and 7. The arms 17, 18 and 19 gradually extend, completing the loading of the group of bottles 10 onto the conveyor 13 of the lehr 12, as shown in Figure 6. Once loading has been completed, the first actuator 33 turns the member 16 counterclockwise until it reaches an angle which is set initially by virtue of the unit (U) and is in any case smaller than a quarter turn, in order to gradually separate the bar 20 from the bottles 10, as shown in Figure 8. During this rotation, as shown in Figure 8, and during the subsequent opposite rotation in order to return to the initial position, the arms 17, 18 and 19 retract the bar 20 until it is in the position in which it is ready to start a new loading cycle. Furthermore, with this device it is easy to load the lehr in staggered rows (not shown), since it is sufficient to enter a suitable parameter in the unit (U) when operation begins.

In practice it has been observed that the described device achieves the intended aim and objects, since it is compact, can be adapted with a small number of simple operations both to right-side delivery and to left-side delivery of the bottles by the conveyor belt and can be easily modified in order to adapt its dimensions to those of the inlet of the lehr. The transfer device is furthermore simplified and almost self-evident in use; accordingly, the operator can fully utilize its characteristics and particularities in a short time and without requiring expensive and long training periods. Finally, the device has very high safety levels both during operation and during maintenance to be performed on the device and on the units controlled by it. In this regard it should be noted that bar replacement operations occur in complete safety, since it is sufficient to turn through approximately 180° the member that supports the loading arms by virtue of the corresponding actuator in order to arrange the bar in the opposite position with respect to the working position and therefore at a suitable distance from the loading inlet of the lehr. Bar replacement is furthermore facilitated and made faster by the described guide and roller system. Furthermore, in this situation the operators are particularly facilitated in performing any maintenance on the belt or lehr itself. Finally, as can be noted, the device is constructively far less complicated than known devices and can therefore be manufactured with significantly lower costs than known devices.

The device according to the invention is susceptible of numerous modifications and variations, all of which are within the scope of the same inventive concept expressed herein.

All the details may furthermore be replaced with other technically equivalent elements.

In practice, the materials used, as well as the contingent shapes and dimensions, may be any according to requirements.

## Claims

1. A devices (9) for transferring glass objects (10) from a conveyor (11) to a treatment apparatus (12) which is arranged to the side of said conveyor in a substantially perpendicular direction, comprising a supporting structure (15) which is laterally adjacent to said conveyor and lies opposite said treatment apparatus with respect to said conveyor, **characterized in that** it comprises a member (16) which is rotatably supported by said structure and rotates on command about an axis which is parallel to the feed direction of said belt, a plurality of loading arms (17, 18, 19) which are articulated, can move on command and are hinged along said member in order to guide a pusher bar (20) which is adapted to move groups of said objects from said conveyor to said apparatus.

2. The device (9) according to claim 1, **characterized in that** said supporting structure (15) can move at least at right angles to the direction of feed of said conveyor belt and at least in a vertical direction in order to adjust the working distance and height of said device (9) with respect to said conveyor belt (11).

3. The device (9) according to one or more of the preceding claims, **characterized in that** said supporting structure (15) comprises at least two laterally arranged lifting means (21, 22) which are formed by pairs of posts which are associated, in a lower region, with plates (23) which can slide within pairs of guides (24, 25) which are arranged in a parallel configuration at right angles to the direction of feed of said conveyor belt (11) and are associated, in an upward region, with plates (27) which support said member (16), said posts comprising pairs of tubular members (28, 29) which can slide vertically with respect to each other by virtue of the action of manual lifting units (30) which are arranged between pairs of said adjacent posts.

4. The device (9) according to one or more of the preceding claims, **characterized in that** said member (16) comprises a longitudinally elongated box-like beam which is arranged parallel to the direction of feed of said conveyor belt (11), the ends of said member being joined to pivots, one of said pivots being engaged in a rolling bearing which is in turn accommodated within a support (31) which is associated with one of said supporting plates (27), the other one of said pivots being connected to a first electric actuator (33) which turns said member about said axis which is parallel to said direction of advancement of said conveyor belt.

5. The device (9) according to one or more of the preceding claims, **characterized in that** it comprises first hinges (34, 35, 36) of said arms (17, 18, 19), said first hinges being constituted by hinge members (37, 38, 39) which are associated with said member, are uniformly spaced and form C-shaped tabs in which the opening is directed forward so as to accommodate the ends of first tubular members (40, 41, 42) of said arms, engaging them by virtue of hinge pins (43, 44, 45).

6. The device (9) according to one or more of the preceding claims, **characterized in that** it comprises a second electric actuator (46) which is rigidly connected to the hinge pin (44) of the centrally arranged arm (18), said second actuator moving on a horizontal plane said first tubular member (41) of said centrally arranged arm.

7. The device (9) according to one or more of the preceding claims, **characterized in that** said arms (17, 18, 19) comprise said first tubular members (40, 41, 42) and second tubular members (47, 48, 49) which are mutually articulated by second central hinges (50, 51, 52).

8. The device (9) according to one or more of the preceding claims, **characterized in that** said second central hinges (50, 51, 52) comprise the end portions of said first C-shaped tubular members (40, 41, 42) and the end portions of said second tubular members (47, 48, 49) which are accommodated in said C-shaped portions, which are mutually engaged by connecting pins.

9. The device (9) according to one or more of the preceding claims, **characterized in that** it comprises a third electric actuator (53) which is associated with the C-shaped end portion of said first tubular member (41) of said central arm (18), said third electric actuator moving said second tubular members (48) of said central arm on a horizontal plane with respect to said first tubular member of said central arm.

10. The device (9) according to one or more of the preceding claims, **characterized in that** at least one (47) of said second tubular members (47, 48, 49) is curved, so as to avoid interfering with the transit of said objects (10) on said conveyor belt (11).

11. The device (9) according to one or more of the preceding claims, **characterized in that** it comprises third hinges (54, 55, 56) between the ends of said second tubular members (47, 48, 49) and said pusher bar (20), said third hinges being constituted by prism-shaped members (57) which are associated with said ends of said second tubular members (47, 48, 49) which accommodate pins (58) which are in turn engaged with the bar holder (59) of said pusher bar.

12. The device (9) according to one or more of the preceding claims, **characterized in that** said pusher bar (20) oscillates on command with respect to said bar holder (59) by virtue of the action of a linear actuator.

13. The device (9) according to one or more of the preceding claims, **characterized in that** said bar holder (59) supports a plurality of hinges (60) which support a longitudinal member (61) which has an L-shaped profile and accommodates, at one end, a longitudinal member (62) which has a C-shaped profile on which longitudinal V-shaped guides are in turn provided for the sliding of a pair of complementarily shaped rollers (63) which support said pusher bar (20) by virtue of pivots (64), and supports, at the other end, a retainer for said bar.

14. The device (9) according to one or more of the preceding claims, **characterized in that** it comprises a unit (U) for programming and controlling the operating steps of said device which is associated with said first (33), second (46) and third (53) electric actuators.

## Patentansprüche

1. Vorrichtung (9) zum Überführen von Glas-Objekten (10) von einem Fördermittel (11) zu einer Behandlungs-Einrichtung (12), die an der Seite des Fördermittels in einer im wesentlichen senkrechten Richtung angeordnet ist, enthaltend: eine Stützkonstruktion (15), die sich seitlich benachbart zu dem Fördermittel befindet und bezüglich des Fördermittels der Behandlungs-Einrichtung gegenüberliegt, **dadurch gekennzeichnet, daß** sie ein durch die Konstruktion drehbar gestütztes und sich auf Befehl um eine Achse, die parallel zu der Förderrichtung des Bandes ist, drehendes Element (16) und eine Vielzahl von Ladearmen (17, 18, 19) enthält, die angelenkt sind, auf Befehl bewegt werden können und die entlang des Elementes schwenkbar sind, um eine Ausstoßstange (20) zu führen, die zur Bewegung von Gruppen der Objekte von dem Fördermittel zu der Einrichtung eingerichtet ist.

2. Vorrichtung nach Anspruch 1, **dadurch gekennzeichnet, daß** die Stützkonstruktion (15) wenigstens rechtwinkelig zu der Förderrichtung des Förderbandes (11) und wenigstens in einer vertikalen Richtung bewegbar ist, um den Arbeitsabstand und die Höhe der Vorrichtung (9) bezüglich des Förderbandes (11) einzustellen.

3. Vorrichtung nach einem oder mehreren der vorangehenden Ansprüche, **dadurch gekennzeichnet, daß** die Stützkonstruktion (15) wenigstens zwei seitlich angeordnete Hebemittel (21, 22) enthält, die aus Paaren von in einem unteren Bereich mit Platten (23), die innerhalb von Paaren von Führungen (24, 25) verschoben werden können, die in einer parallelen Anordnung in rechten Winkeln zu der Förderrrichtung des Förderbandes (11) angeordnet sind, und in einem nach oben gerichteten Bereich mit Platten (27) verbundenen Stützen verbunden sind, wobei die Platten (27) das Element (16) stützen, wobei die Stützen Paare von rohrförmigen Elementen (28, 29) enthalten, die vertikal zueinander aufgrund der Wirkung manueller, zwischen Paaren der benachbarten Stützen angeordneten Hebeeinheiten (30) verschoben werden können.

4. Vorrichtung gemäß einem oder mehreren der vorangehenden Ansprüche, **dadurch gekennzeichnet, daß** das Element (16) einen longitudinal ausgedehnten, kastenartigen Träger enthält, der parallel zu der Förderrichtung des Förderbandes (11) angeordnet ist, wobei an den Enden des Elementes Drehzapfen angesetzt sind, von denen einer in ein Wälzlager eingreift, das in Drehrichtung von einer mit einer der Trägerplatten (27) verbundenen Abstützung (31) aufgenommen ist, und der andere an ein erstes elektrisches Betätigungsorgan (33) angeschlossen ist, welches das Element um die Achse dreht, die parallel zu der Förderrichtung des Förderbandes ist.

5. Vorrichtung nach einem oder mehreren der vorangehenden Ansprüche, **dadurch gekennzeichnet, daß** sie erste Gelenke (34, 35, 36) der Arme (17, 18, 19) enthält, wobei die ersten, aus Gelenkelementen (37, 38, 39), die mit dem Element verbunden sind, gebildeten Gelenke gleichmäßig beabstandet sind und C-förmige Lappen bilden, deren Öffnung nach vom gerichtet ist, um die Enden der ersten rohrförmigen Elemente (40, 41, 42) der Arme aufzunehmen, wobei diese vermöge von Gelenkstiften (43, 44, 45) erfaßt werden.

6. Vorrichtung gemäß einem oder mehreren der vorangehenden Ansprüche, **dadurch gekennzeichnet, daß** sie ein zweites elektrisches Betätigungsorgan (46) enthält, das starr mit dem Gelenkstift (44) des mittleren Arms verbunden ist, wobei das zweite Betätigungsorgan sich in einer horizontalen Ebene des ersten rohrförmigen Elementes (41) des mittleren Arms bewegt.

7. Vorrichtung gemäß einem oder mehreren der vorangehenden Ansprüche, **dadurch gekennzeichnet, daß** die Arme (17, 18, 19) die ersten rohrförmigen Elemente (40, 41, 42) und zweite rohrförmige Elemente (47, 48, 49) enthalten, die gegenseitig über zweite mittige Gelenke (50, 51, 52) gelenkig verbunden sind.

8. Vorrichtung gemäß einem oder mehreren der vorangehenden Ansprüche, **dadurch gekennzeichnet, daß** die zweiten mittigen Gelenke (50, 51, 52) die Endabschnitte der ersten C-förmigen, rohrförmigen Elemente (40, 41, 42) und die Endabschnitte der zweiten rohrförmigen Elemente (47, 48, 49) enthalten, die in den C-förmigen Abschnitten aufgenommen sind, die sich gegenseitig über Verbindungsstifte erfassen.

9. Vorrichtung gemäß einem oder mehreren der vorangehenden Ansprüche, **dadurch gekennzeichnet, daß** sie ein drittes elektrisches Betätigungsorgan (53) enthält, das mit dem C-förmigen Endabschnitt des ersten rohrförmigen Elementes (41) des mittleren Armes (18) verbunden ist, wobei das dritte elektrische Betätigungsorgan das zweite rohrförmige Element (48) des mittleren Armes in einer horizontalen Ebene bezüglich des ersten rohrförmigen Elementes des mittleren Armes bewegt.

10. Vorrichtung gemäß einem oder mehreren der vorangehenden Ansprüche, **dadurch gekennzeichnet, daß** wenigstens eines (47) der zweiten rohrförmigen Elemente (47, 48, 49) abgebogen ist, um eine Wechselwirkung mit dem Durchgang der Objekte (10) auf dem Förderband (11) zu vermeiden.

11. Vorrichtung gemäß einem oder mehreren der vorangehenden Ansprüche, **dadurch gekennzeichnet, daß** sie drei Gelenke (54, 55, 56) zwischen den Enden der zweiten rohrförmigen Elemente (47, 48, 49) und der Ausstoßstange (20) enthält, wobei die dritten Gelenke durch prismenförmige Elemente (57) gebildet sind, die mit den Enden der zweiten rohrförmigen Elemente (47, 48, 49) verbunden sind, die Stife (58) aufnehmen, welche der Reihe nach mit dem Stangenhalter (59) der Ausstoßstange in Eingriff stehen.

12. Vorrichtung gemäß einem oder mehreren der vorangehenden Ansprüche, **dadurch gekennzeichnet, daß** die Ausstoßstange (20) auf Befehl bezüglich des Stangenhalters (59) vermöge der Bewegung eines linearen Betätigungsorganes schwingt.

13. Vorrichtung gemäß einem oder mehreren der vorangehenden Ansprüche, **dadurch gekennzeichnet, daß** der Stangenhalter (59) eine Vielzahl von Gelenken (60) trägt, die ein longitudinales Element (61) halten, das einen L-förmigen Querschnitt aufweist und an einem Ende ein longitudinales Element (62) aufnimmt, das einen C-förmigen Querschnitt aufweist, an welchem longitudinale V-förmige Führungen in Reihe zum Laufen eines Paares von komplementär geformten Rollen (63) vorgesehen sind, welche die Ausstoßstange (20) vermöge von Drehzapfen (64) abstützen, und an dem anderen Ende eine Aufnahme für die Stange trägt.

14. Vorrichtung gemäß einem oder mehreren der vorangehenden Ansprüche, **dadurch gekennzeichnet, daß** sie eine Einheit (U) zur Programmierung und Steuerung der Betriebsschritte der Vorrichtung enthält, wobei die Einheit (U) mit dem ersten (33), dem zweiten (46) und dem dritten (53) elektrischen Betätigungsorgan verbunden ist.

## Revendications

1. Dispositif (9) de transfert d'objets en verre (10) d'un convoyeur (11) à un appareil de traitement (12) qui est placé sur le côté dudit convoyeur selon une direction sensiblement perpendiculaire, comprenant une structure porteuse (15) qui est latéralement adjacente audit convoyeur et est située à l'opposé dudit appareil de traitement par rapport audit convoyeur **caractérisé en ce qu'**il comprend un élément (16) qui est porté de façon rotative par ladite structure et pivote sur commande autour d'un axe qui est parallèle au sens d'alimentation de ladite bande, une pluralité de bras de chargement (17, 18, 19) qui sont articulés, peuvent se déplacer sur commande et sont articulés le long dudit élément afin de guider une barre de poussée (20) qui est adaptée pour déplacer des groupes desdits objets depuis ledit convoyeur jusqu' audit appareil.

2. Dispositif (9) selon la revendication 1, **caractérisé en ce que** ladite structure porteuse (15) peut se déplacer au moins à angles droits par rapport à la direction d'alimentation de ladite bande de convoyeur, et au moins dans une direction verticale afin de régler la distance et la hauteur de travail dudit dispositif (9) par rapport à ladite bande de convoyeur (11).

3. Dispositif (9) selon une ou plusieurs des revendications précédentes, **caractérisé en ce que** ladite structure porteuse (15) comprend au moins deux moyens de levage (21, 22) disposés latéralement qui sont formés par des paires de montants qui sont solidarisées, dans une région inférieure, à des plaques (23) pouvant coulisser à l'intérieur de paires de guides (24, 25) qui sont placés dans une configuration parallèle à angles droits par rapport au sens d'alimentation de ladite bande de convoyeur (11) et sont solidarisées, dans une région supérieure, à des plaques (27) supportant ledit élément (16), lesdits montants comprenant des paires d'éléments tubulaires (28, 29) pouvant coulisser verticalement les uns par rapport aux autres en vertu de l'action d'unités de levage manuel (30) qui sont placées entre des paires desdits montants adjacents.

4. Dispositif (9) selon une ou plusieurs des revendications précédentes, **caractérisé en ce que** ledit élément (16) comprend une poutre en forme de boîtier, allongée longitudinalement, qui est disposée parallèlement à la direction d'alimentation de ladite bande (11) de convoyeur, les extrémités dudit élément étant jointes à des pivots, un desdits pivots étant engagé dans un roulement qui est à son tour logé dans un support (31) qui est solidarisé à une desdites plaques de support (27), l'autre desdits pivots étant relié à un premier actionneur (33) électrique qui fait pivoter ledit élément autour dudit axe qui est parallèle à ladite direction de progression de ladite bande de convoyeur.

5. Dispositif (9) selon une ou plusieurs des revendications précédentes, **caractérisé en ce qu'**il comprend des premières charnières (34, 35, 36) desdits bras (17, 18, 19), lesdites premières charnières étant formées d'éléments (37, 38, 39) de charnière qui sont solidarisées audit élément, sont espacés uniformément et forment des pattes en forme de C dans lesquelles l'ouverture est dirigée vers l'avant de façon à recevoir les extrémités des premiers éléments (40, 41, 42) tubulaires desdits bras, en leur étant associées au moyen d'axes d'articulation (43, 44, 45).

6. Dispositif (9) selon une ou plusieurs des revendications précédentes, **caractérisé en ce qu'**il comprend un deuxième actionneur électrique (46) qui est rigidement associé à l'axe d'articulation (44) du bras (18) disposé centralement, ledit deuxième actionneur déplaçant dans un plan horizontal ledit premier élément (41) tubulaire dudit bras disposé centralement.

7. Dispositif (9) selon une ou plusieurs des revendications précédentes, **caractérisé en ce que** lesdits bras (17, 18, 19) comprennent lesdits premiers éléments tubulaires (40, 41, 42) et les deuxièmes éléments tubulaires (47, 48, 49) qui sont mutuellement articulés par des deuxièmes charnières centrales (50, 51, 52).

8. Dispositif (9) selon une ou plusieurs des revendications précédentes, **caractérisé en ce que** lesdites deuxièmes charnières centrales (50, 51, 52) comprennent les parties d'extrémité desdits premiers éléments tubulaires en forme de C (40, 41, 42), et les parties d'extrémité desdites deuxièmes éléments tubulaires (47, 48, 49) qui sont logées dans lesdites parties en forme de C, qui sont mutuellement associées par des axes d'articulation.

9. Dispositif (9) selon une ou plusieurs des revendications précédentes, **caractérisé en ce qu'**il comprend un troisième actionneur électrique (53) qui est associé à la partie d'extrémité en forme de C dudit premier élément tubulaire (41) dudit bras central (18), ledit troisième actionneur électrique déplaçant ledit deuxième élément tubulaire (48) dudit bras central dans un plan horizontal par rapport audit premier élément tubulaire dudit bras central.

10. Dispositif (9) selon une ou plusieurs des revendications précédentes, **caractérisé en ce que** au moins un (47) desdits deuxièmes éléments tubulaires (47, 48, 49) est incurvé, de façon à éviter une interférence avec le transit desdits objets (10) sur ladite bande de convoyeur (11).

11. Dispositif (9) selon une ou plusieurs des revendications précédentes, **caractérisé en ce qu'**il comprend des troisièmes charnières (54, 55, 56) entre les extrémités desdits deuxièmes éléments tubulaires (47, 48, 49) et ladite barre de poussée (20), lesdites troisièmes charnières étant formées d'éléments prismatiques (57) qui sont associés aux dites extrémités desdits deuxièmes éléments tubulaires (47, 48, 49) qui reçoivent des axes (58) qui sont à leur tour engagés dans le support de barre (59) de ladite barre de poussée.

12. Dispositif (9) selon une ou plusieurs des revendications précédentes, **caractérisé en ce que** ladite barre de poussée (20) oscille sur commande par rapport audit support de barre (59) en vertu de l'action d'un actionneur linéaire.

13. Dispositif (9) selon une ou plusieurs des revendications précédentes, **caractérisé en ce que** ledit support de barre (59) supporte une pluralité de charnières (60) qui supportent un élément longitudinal (61) qui présente un profil en forme de L et reçoit, à une extrémité, un élément longitudinal (62) qui présente un profil en forme de C sur lequel des guides longitudinaux en forme de V sont à leur tour prévus pour le coulissement d'une paire de rouleaux conformés de façon complémentaire (63) qui supportent ladite barre de poussée (20) au moyen de pivots (64), et supportent à l'autre extrémité, un dispositif de retenue de ladite barre.

14. Dispositif (9) selon une ou plusieurs des revendications précédentes, **caractérisé en ce qu'**il comprend une unité (U) de programmation et de commande des étapes de fonctionnement dudit dispositif, qui est associée auxdits premier (33), deuxième (46) et troisième (53) actionneurs électriques.
